(19) Europäisches Patentamt
European Patent Office
Office européen des brevets

(11) **EP 4 539 228 A1**

(12) **EUROPEAN PATENT APPLICATION**
published in accordance with Art. 153(4) EPC

(43) Date of publication:
**16.04.2025 Bulletin 2025/16**

(21) Application number: **22964711.0**

(22) Date of filing: **08.11.2022**

(51) International Patent Classification (IPC):
***H01M 50/242*** (2021.01)

(52) Cooperative Patent Classification (CPC):
**H01M 50/242; Y02E 60/10**

(86) International application number:
**PCT/CN2022/130502**

(87) International publication number:
**WO 2024/098234 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Hong Kong (HK)**

(72) Inventors:
• **LIN, Chenhui
Ningde, Fujian 352100 (CN)**

• **HE, Jianfu
Ningde, Fujian 352100 (CN)**
• **LIU, Qian
Ningde, Fujian 352100 (CN)**
• **YE, Yonghuang
Ningde, Fujian 352100 (CN)**

(74) Representative: **Behr, Wolfgang
Lorenz Seidler Gossel
Rechtsanwälte Patentanwälte
Partnerschaft mbB
Widenmayerstraße 23
80538 München (DE)**

(54) **BATTERY CELL, BATTERY, AND ELECTRIC DEVICE**

(57) Some embodiments of this application disclose a battery cell, a battery, and an electrical device. The battery cell includes: a shell; an electrode assembly, where the electrode assembly is disposed in the shell; an electrolyte solution, where the electrolyte solution fills the shell; and a cushion, where the cushion is accommodated in the shell and attached to the electrode assembly. The cushion includes a sealed bag and a cushion pad. The sealed bag covers a surface of the cushion pad. The cushion inside the battery cell according to this application achieves good chemical stability and cushioning performance, and increases the energy density and cycle life of the battery while ensuring stability of the electrode assembly in the battery cell.

FIG. 4

EP 4 539 228 A1

**Description**

**TECHNICAL FIELD**

This application relates to the field of batteries, and in particular, to a battery cell, a battery, and an electrical device.

**BACKGROUND**

In recent years, batteries have been widely applied in energy storage power systems such as hydro, thermal, wind, and solar power stations, and in many other fields such as electric tools, electric bicycles, electric motorcycles, and electric vehicles, military equipment, and aerospace, thereby gaining great development.

To improve the stability of an electrode assembly in a battery cell, a cushion is disposed in the battery cell to reduce wobbling of the electrode assembly in the battery cell. However, side reactions occur between the buffer and an electrolyte solution inside the battery cell, and the buffer is corroded by the electrolyte solution. The side reactions give rise to by-products that affect electrochemical reactions of the battery, thereby severely impairing the energy density and cycle life of the battery. Therefore, how to increase the energy density and cycle life of a battery is a pressing technical challenge.

**SUMMARY**

Some embodiments of this application provide a battery cell, a battery, and an electrical device. A cushion is disposed inside the battery cell. The cushion is free from corrosion by an electrolyte solution, thereby increasing the energy density and cycle life of the battery while ensuring stability of the electrode assembly in the battery cell.

According to a first aspect, this application provides a battery cell, including: a shell; an electrode assembly, where the electrode assembly is disposed in the shell; an electrolyte solution, where the electrolyte solution fills the shell; and a cushion, where the cushion is accommodated in the shell and attached to the electrode assembly. The cushion includes a sealed bag and a cushion pad. The sealed bag covers a surface of the cushion pad.

In an embodiment of this application, a cushion is disposed inside the battery cell. The cushion is accommodated in the shell and attached to the electrode assembly. The cushion can fix the position of the electrode assembly in the housing, reduce the wobbling of the electrode assembly, and ensure stability of the electrode assembly in the battery cell. In addition, the cushion includes a cushion pad and a sealed bag that covers the cushion pad. The sealed bag can isolate the cushion pad from the electrolyte solution, and avoid chemical reactions caused by the contact between the cushion pad and the electrolyte solution, thereby preventing a product of the chemical reactions from affecting the electrochemical system of the battery, and effectively increasing the cycle life of the battery. Moreover, because the cushion does not absorb the electrolyte solution, not much electrolyte solution needs to be injected into the battery cell during preparation of the battery cell, thereby increasing the energy density of the battery.

In some embodiments, the cushion includes a plurality of cushion pads, and the sealed bag covers surfaces of the plurality of cushion pads.

In these embodiments of this application, the number of cushion pads in the sealed bag can be set flexibly depending on the shape or size of the battery cell as well as the shape or size of the electrode assembly, so that the cushion is adaptable to more types of batteries.

In some embodiments, the sealed bag includes a plurality of sub-regions. Each of the sub-regions is used for accommodating one of the cushion pads. At least one fixing unit is disposed between two adjacent sub-regions. The fixing unit is configured to block the cushion pad from moving in a first direction or a second direction. The first direction is a length direction of the sealed bag, and the second direction is a length direction of the sealed bag.

In some embodiments, the cushion is disposed between the electrode assembly and the shell.

In some embodiments, the battery cell includes a plurality of the electrode assemblies. The cushion is disposed between adjacent electrode assemblies.

In these embodiments of this application, in a case that a plurality of electrode assemblies are disposed in a battery cell, the number of cushions may be set as required.

In some embodiments, the sealed bag is made of a thermoplastic material.

In some embodiments, the thermoplastic material includes at least one of polyterephthalate, polyethylene, or polypropylene.

In some embodiments, the cushion pad is made of a polymer foam material.

In some embodiments, the polymer foam material includes at least one of silicone rubber, melamine, or melamine resin.

In some embodiments, a thickness D1 of the sealed bag and a thickness D2 of the cushion pad satisfy: $2D1 \leq D2$.

In some embodiments, the thickness D1 of the sealed bag satisfies: $0.01 \text{ mm} \leq D1 \leq 0.8 \text{ mm}$.

In some embodiments, the thickness D2 of the cushion pad satisfies: $0.2 \text{ mm} \leq D2 \leq 8 \text{ mm}$.

In these embodiments of this application, the thicknesses of the sealed bag and the cushion pad are set to the specified values, thereby avoiding an excessive thickness of the sealed bag that restricts the deformability of the cushion pad, ensuring a sufficient deformation space for the electrode assembly, and improving the cushioning capability of the cushion.

In some embodiments, a height H1 of the sealed bag and a height H2 of the cushion pad satisfy: $1 < H1/H2 \leq 1.3$.

In some embodiments, a length L1 of the sealed bag and a length L2 of the cushion pad satisfy: $1 < L1/L2 \leq 1.3$.

In some embodiments, in a thickness direction of the sealed bag, a ratio P of an area of the sealed bag to an area of the cushion satisfies: $1 < P \leq 1.7$.

In these embodiments of this application, the length relationship, height relationship, or area ratio in the thickness direction between the sealed bag and the cushion is set to the specified value. Therefore, on the one hand, the settings ensure a good effect of the sealed bag in covering the cushion pad, and effectively avoid the contact between the cushion pad and the electrolyte solution. On the other hand, the settings avoid the problem that the sealed bag is overlarge and the cushion pad slides relative to the sealed bag, and consequently, the force on the cushion is affected. Therefore, the settings further improve the cushioning capability of the cushion.

According to a second aspect, a battery is provided. The battery includes the battery cell disclosed in the first aspect or any embodiment of the first aspect.

According to a third aspect, an electrical device is provided. The electrical device includes the battery cell disclosed in the first aspect or any embodiment of the first aspect and/or the battery disclosed in the second aspect. The battery cell and/or the battery is configured to provide electrical energy.

**BRIEF DESCRIPTION OF DRAWINGS**

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.

FIG. 1 is a schematic structural diagram of a vehicle according to this application;
FIG. 2 is a schematic structural diagram of a battery according to this application;
FIG. 3 is a schematic structural diagram of a battery cell according to this application;
FIG. 4 is a schematic structural diagram of another battery cell according to this application;
FIG. 5 is a schematic structural diagram of a cushion according to this application;
FIG. 6 is a schematic structural diagram of another cushion according to this application;
FIG. 7 is another schematic structural diagram of another battery cell according to this application;
FIG. 8 is another schematic structural diagram of a battery according to this application; and
FIG. 9 is another schematic structural diagram of an electrical device according to this application.

**DETAILED DESCRIPTION OF EMBODIMENTS**

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

In this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

The development of the battery technology needs to consider a plurality of design factors such as energy density, cycle life, and processability, so as to improve the quality and production efficiency of the batteries.

To improve the space utilization rate inside a battery, one method is to dispose a cushion pad inside the battery cell, where the cushion pad is conventionally disposed between battery cells. In this way, no cushion pad needs to be disposed between the battery cells, and the same internal space of the battery can accommodate more battery cells, thereby improving the grouping efficiency of the battery cells and increasing the capacity of the battery.

However, during actual production and use, the cushion pad disposed inside the battery cell is in direct contact with an electrode assembly and an electrolyte solution. On the one hand, the cushion pad can absorb the electrolyte solution due to inherent compressibility. The cushion pad is in direct contact with the electrode assembly, so that excess electrolyte solution needs to be injected into the battery cell during preparation of the battery cell to ensure sufficient infiltration for the electrode assembly. The excess electrolyte solution does not participate in electrochemical reactions of the battery but increases the mass of the battery and reduces the energy density of the battery. On the other hand, some chemical reactions that do not contribute to the battery capacity, that is, side reactions, occur between the electrolyte solution and the cushion pad. The side reactions between the electrolyte solution and the cushion pad severely impair the cycle life of the battery. Specifically, the side reactions corrode the structure of the cushion pad, thereby impairing the cushioning performance of the cushion pad. The side reactions also give rise to by-products, thereby affecting the electrochemical reactions of the battery.

In view of the foregoing situation, this application provides a battery cell, a battery, and an electrical device. A specially designed cushion is fitted in the battery cell, and can avoid direct contact between the cushion pad and the electrolyte solution, thereby improving the energy density and cycle life of the battery.

The technical solutions described in this embodiment of this application are applicable to various electrical devices that use a battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For brevity, all the following embodiments are described by using a vehicle as an example.

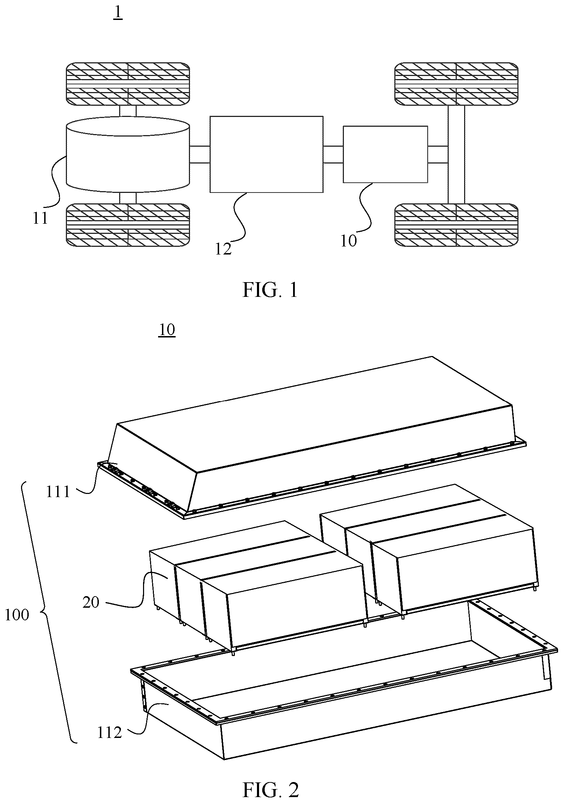

For example, as shown in FIG. 1, which is a schematic structural diagram of a vehicle 1 according to this application, the vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 11, a controller 12, and a battery 10 may be disposed inside the vehicle 1. The controller 12 is configured to control the battery 10 to supply power to the motor 11. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

In this application, a battery 10 means a physical module that includes one or more battery cells to provide electrical energy. For example, the battery 10 referred to in this application may include a battery module, a battery pack, and the like. The battery 10 may further include a box configured to package one or more battery cells. The box prevents liquid or other foreign matters from affecting the charging or discharging of the battery cells.

For example, as shown in FIG. 2, which is a schematic structural diagram of a battery 10 according to this application, the battery 10 may include a plurality of battery cells 20. The battery 10 may further include a box 100 (or referred to as a casing). The box 100 is hollowed out inside. A plurality of battery cells 20 are accommodated in the box 100. As shown in FIG. 2, the box 100 may include two parts, herein referred to as a first part 111 and a second part 112 respectively. The first part 111 and the second part 112 are snap-fitted together. The shapes of the first part 111 and the second part 112 may depend on the shape of a plurality of battery cells 20 combined. An opening may be created on both the first part 111 and the second part 112. For example, the first part 111 and the second part 112 each may be a hollow cuboid, and each may include one opened surface. The opening of the first part 111 is opposite to the opening of the second part 112. The first part 111 and the second part 112 are snap-fitted to each other to form a box 100 that includes a closed cavity. The plurality of battery cells 20 are combined and connected in parallel, series, or series-and-parallel pattern, and then placed into the box 100 that is formed by snap-fitting the first part 111 and the second part 112.

Optionally, the battery 10 may further include other structures, details of which are omitted here. For example, the battery 10 may further include a busbar component. The busbar component is configured to implement electrical connection between the plurality of battery cells 20, such as parallel connection, series connection, or series-parallel connection. Specifically, the busbar component may implement the electrical connection between the battery cells 20 by connecting electrode terminals of the battery cells 20. Further, the busbar component may be fixed to the electrode terminals of the battery cells 20 by welding. Electrical energy of the plurality of battery cells 20 may be further led out by a conductive mechanism running through the box 100. Optionally, the conductive mechanism may also belong to the busbar component.

Depending on different power requirements, the number of battery cells 20 may be set to any value. A plurality of battery cells 20 may be connected in series, parallel, or series-and-parallel pattern to achieve a battery 10 of a relatively high capacity or power. The battery 10 is also referred to as a battery pack. Alternatively, the plurality of battery cells 20 may be connected in series, parallel, or series-and-parallel pattern to form a battery module, and then a plurality of battery modules may be connected in series, parallel, or series-and-parallel pattern to form the battery 10. In other words, the plurality of battery cells 20 may directly form the battery 10, or form the battery modules that are then used to form the battery 10.

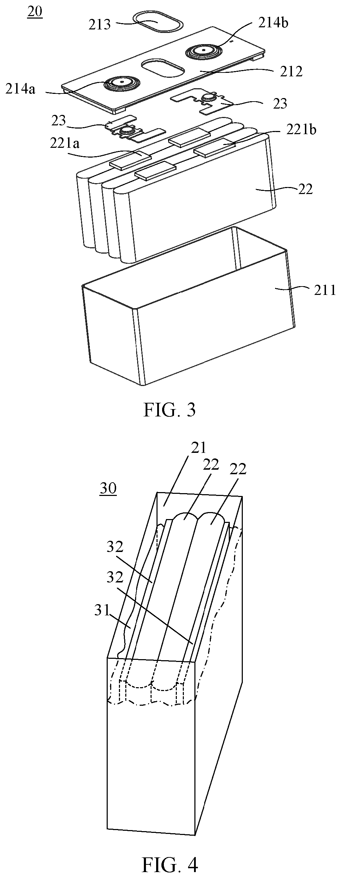

The following briefly describes the structure of a battery cell 20 according to an embodiment of this application with reference to FIG. 3.

The battery cell 20 typically includes one or more electrode assemblies 22 and a shell 21. The shell 21 includes a housing 211 opened and an end cap 212. The shape of the housing 211 depends on the shape of one or more electrode assemblies 22 combined. As an example, the housing 211 shown in FIG. 3 is a hollow cuboid. One opening may be created on the housing 211, or two openings are created on two opposite surfaces of the housing respectively to facilitate placement of one or more electrode assemblies 22 into the housing 211. The end cap 212 fits and covers the opening of the housing 211 to form a closed cavity that is configured to accommodate the electrode assembly 22. The shell 21 is filled with an electrolyte such as an electrolyte solution. In some other embodiments, two openings may be created on the housing 211.

The battery cell 20 may further include two an electrode terminal 214a and an electrode terminal 214b. The electrode terminals may be disposed on the end cap 212. The end cap 212 is typically in the shape of a flat plate. The electrode terminal 214a and the electrode terminal 214b are fixed onto a flat plate surface of the end cap 212. The two electrode terminals 241 are of opposite polarities. For example, the electrode terminal 214a is a positive electrode terminal 214a, and the electrode terminal 214b is a negative electrode terminal 214b. A connecting component 23, also referred to as a current collecting component 23, is disposed corresponding to each electrode terminal, and is located between the end cap 212 and the electrode assembly 22, and is configured to implement an electrical connection between the electrode assembly 22 and the electrode terminal 214a or electrode terminal 214b. When the shell includes two end caps 212, the electrode terminal 214a and the electrode terminal 214b may be disposed on one end cap 212 concurrently, or may be disposed on the two end caps 212 respectively.

As shown in FIG. 3, each electrode assembly 22 includes a tab 221a and a tab 221a of opposite polarities. For example, the tab 221a is a positive tab 221a, and the tab 221b is a negative tab 221b. The positive tab 221a or the negative tab 221b of one or more electrode assemblies 22 is connected to the positive electrode terminal 214a or the positive electrode terminal 214b respectively by one connecting component 23. Understandably, the tab 221a may be a negative tab instead, and the electrode terminal 214a may be a negative electrode terminal instead.

From a perspective of structure, electrode assemblies 22 are classed into a jelly-roll electrode assembly and a stacked-type electrode assembly. The jelly-roll electrode assembly is an electrode assembly 22 of a jell-roll structure formed by winding a long-sheet positive electrode plate and a long-sheet negative electrode plate that are interspaced with a separator. The stacked-type electrode assembly is an electrode assembly 22 of a stacked structure formed by sequentially and alternately stacking a positive electrode plate and a negative electrode plate that are interspaced with a separator in a Z-shaped stack.

In the battery cell 20, one or more electrode assemblies 22 may be disposed depending on actual use requirements. As shown in FIG. 3, 4 independent electrode assemblies 22 are disposed in the battery cell 20. When a plurality of electrode assemblies 22 are disposed, the same-polarity tabs of a plurality of electrode assemblies 22 may be tucked and flattened to form an entirety, and then connected to the connecting component 23; or, the same-polarity tabs may be connected to the connecting component 23 separately.

In addition, a pressure relief mechanism 213 is typically disposed on one wall of the shell 21 of the battery cell 20. The pressure relief mechanism 213 is configured to be actuated to relieve an internal pressure or temperature when the internal pressure or temperature of the battery cell 20 reaches a threshold.

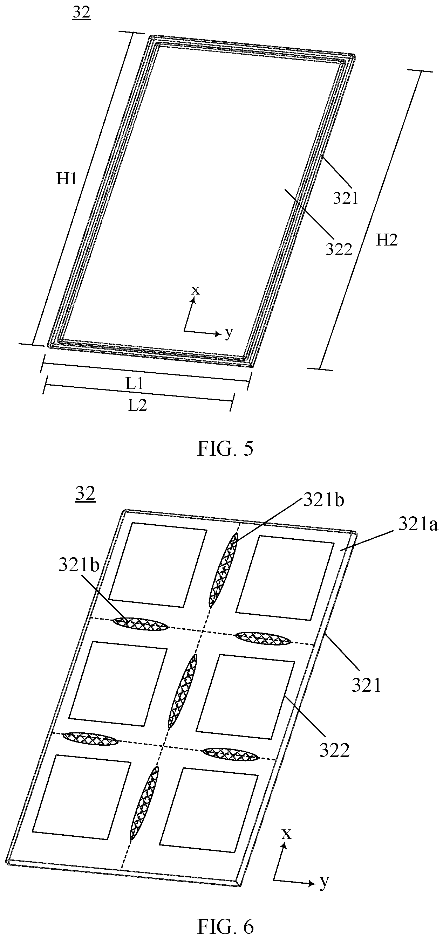

The following describes in detail the structure of another battery cell 30 according to this application with reference to FIG. 4 and FIG. 5. For ease of understanding, FIG. 4 mainly shows the internal arrangement of the battery cell 30, and omits the end cap 212 and the structures related to the end cap 212 such as the positive electrode terminal and the negative electrode terminal.

As shown in FIG. 4 and FIG. 5, the battery cell 30 includes a shell 21, an electrode assembly 22, an electrolyte solution 31, and a cushion 32. The electrode assembly 22 is disposed in the shell 21. The electrolyte solution 31 fills the shell 21. The cushion 32 is accommodated in the shell 21 and attached to the electrode assembly 22. The cushion 32 includes a sealed bag 321 and a cushion pad 322. The sealed bag 321 covers a surface of the cushion pad 322.

In other words, the sealed bag 321 is configured to isolate the cushion pad 322 from the electrolyte solution 31. The cushion pad 322 is a structure that is elastically deformable under an external force.

In this embodiment, the cushion 32 disposed inside the battery cell 30 includes a sealed bag 321, and can isolate the cushion pad 322 from the electrolyte solution 31, thereby avoiding direct contact between the cushion pad 322 and the electrolyte solution 31, solving the problem that the contact between the cushion pad 322 and the electrolyte solution 31 makes the electrolyte solution 31 corrode the cushion pad 322 and impairs the energy density and cycle life of the battery 10, and improving the energy density and cycle life of the battery 10.

In addition, in contrast to other technical solutions in which, for example, the cushion pad 322 is overlaid with a coating layer or cladding layer directly, the cushion 32 in this application does not need to be processed through a costly coating process, thereby reducing the production cost of the battery 10 while simplifying the production process of the battery 10.

FIG. 6 is a schematic structural diagram of another cushion 32 according to this application.

Optionally, as shown in FIG. 6, the cushion 32 includes a plurality of cushion pads 322. The sealed bag 321 covers surfaces of the plurality of cushion pads 322.

Specifically, in an example, one cushion 32 may include one sealed bag 321 and one corresponding cushion pad 322. That is, the sealed bag 321 is in one-to-one correspondence with the cushion pad 322.

In another example, one cushion 32 may include one sealed bag 321 and a plurality of cushion pads 322. The plurality of cushion pads 322 are disposed in the same sealed bag 321. Therefore, the number of cushion pads 322 in the sealed bag 312 may be set flexibly depending on the shape or size of the battery cell 30 as well as the shape or size of the electrode assembly 22, so that the cushion 32 is adaptable to more types of batteries 10. The plurality of cushion pads 322 may be laid flat or arranged in an overlapping manner in the sealed bag 321.

In another example, a plurality of cushions 32 may be disposed inside the battery cell 30. The plurality of cushions 32 may all be cushions 32 in which the sealed bag 321 is in one-to-one correspondence with the cushion pad 322, or may all be cushions 32 in which one sealed bag 321 corresponds to a plurality of cushion pads 322, or may be cushions in which the two types of correspondences exist concurrently.

Still referring to FIG. 6, optionally, the sealed bag 321 includes a plurality of sub-regions 321a. Each of the sub-regions 321a is used for accommodating one of the cushion pads 322. At least one fixing unit 321b is disposed between two adjacent sub-regions 321a. The fixing unit 321b is configured to block the cushion pad 322 from moving in a first direction x or a second direction y.

The first direction x is a height direction of the sealed bag 321, and the second direction y is a length direction of the sealed bag 321.

Specifically, the fixing unit 321b may be formed by hot-pressing the sealed bags 321 in this region and bonding the sealed bags 321 in this region together, or may be another structural unit capable of blocking the movement of the cushion pad 322.

In this embodiment, in a case that a plurality of cushion pads 322 are laid flat in the sealed bag 321, the fixing unit 321b disposed on the sealed bag 321 can effectively avoid an adverse effect on the cushioning performance of the cushion 32 caused by a slip or overlap of the plurality of cushion pads 322 in the sealed bag 321. This arrangement improves the cushioning capability of the cushion 32 while improving the flexibility of disposition of the cushion 32.

Understandably, the sealed bag 321 and the cushion pad 322 in FIG. 5 and FIG. 6 are rectangular as examples, but the shapes of the sealed bag 321 and the cushion 322 may be the same or different. For example, a square, circular, or other shaped cushion pads 322 may be disposed in a rectangular sealed bag 321; and rectangular cushion pads may be disposed in a square, circular, or other shaped sealed bag.

The cushion 32 may be in the shape of a cuboid as shown in FIG. 5 and FIG. 6, or may be in other shapes. In an example, the cushion 32 may be cylindrical. In another example, the cushion 32 may be a hollow cylindrical structure. A jelly-roll electrode assembly 22 may be disposed in the hollow structure or outside the hollow structure. Specifically, the cushion 32 shown in FIG. 6 may be processed into a hollow cylindrical structure by hot-pressing or other means.

Using the cuboidal shell 21 shown in FIG. 4 as an example, the following describes several arrangements of cushions 32. Understandably, the following arrangements are also applicable to cylindrical shells 21.

Still referring to FIG. 4, optionally, the cushion 32 is disposed between the electrode assembly 22 and the shell 21.

Specifically, a cushion 32 may be disposed in a space between the electrode assembly 22 and the shell 21. In this way, the positions of the electrode assembly 22 and the shell 21 are relatively fixed, thereby avoiding relative movement of the electrode assembly 22 in the housing 21, and in turn, preventing the relative movement from causing instability or cutoff of the connection between the tab and the electrode terminal. Therefore, this arrangement improves the product yield rate of the battery 10 while increasing the energy density and cycle life of the battery 10.

For a battery cell 30 that adopts a cuboidal shell 21, in an example, the battery cell 30 may include only one cushion 32. The cushion 32 may be disposed between the electrode assembly 22 and a relatively large sidewall of the shell 21. In this way, a cushioning effect on a larger area can be provided for the electrode assembly 22 when the electrode assembly 22 deforms. In some other examples, when the internal space of the battery cell 30 is relatively small, the cushion 32 may be disposed between the electrode assembly 22 and a relatively small sidewall of the shell 21, thereby saving the internal space of the battery cell 30.

For a battery cell 30 that adopts a cuboidal shell 21, in another example, the battery cell 30 may further include a plurality of cushions 32. The plurality of cushions 32 may be of the same size or different sizes. The plurality of cushions 32 may be all disposed between the electrode assembly 22 and a relatively large sidewall of the shell 21, or may be all disposed between the electrode assembly 22 and a relatively small sidewall of the shell, or a part of the cushions 32 are disposed between the electrode assembly 22 and a relatively large sidewall of the shell 21 and the remaining cushions 32 are disposed between the electrode assembly 22 and a relatively small sidewall of the shell 21.

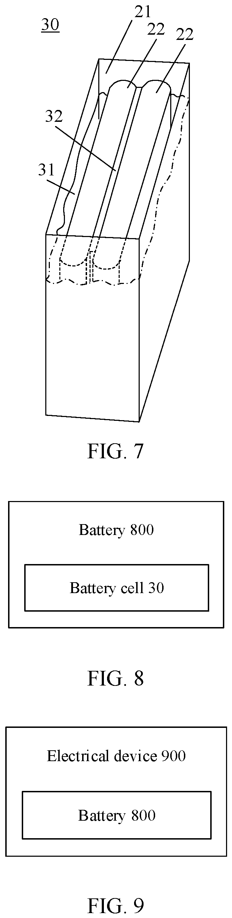

FIG. 7 is another schematic structural diagram of a battery cell 30 according to this application. Understandably, FIG. 7 shows the internal arrangement of the battery cell 30, with some components of the battery cell 30 omitted.

Optionally, referring to FIG. 7, the battery cell 30 includes a plurality of the electrode assemblies 22. The cushion 32 is disposed between adjacent electrode assemblies 22.

Specifically, in a case that the battery cell 30 includes a plurality of electrode assemblies 22, cushions 32 may be disposed between the electrode assemblies 22. In this way, the positions of the electrode assemblies 22 and the shell 21 are relatively fixed, and the mutual squeezing between two adjacent electrode assemblies 22 is avoided. Therefore, when an electrode assembly 22 deforms, the cushion not only plays a cushioning role, but also alleviates the impact of the deformed electrode assembly 22 on other electrode assemblies 22.

In an example, the number of cushions 32 may be set based on the number of electrode assemblies 22. For example, if the battery cell 30 includes n electrode assemblies 22, then n-1 cushions 32 may be disposed, where $n \geq 2$ and n is a positive integer. As an example, the battery cell 30 includes 2 electrode assemblies 22, and 1 cushion 32 is disposed between the two electrode assemblies 22. For another example, the battery cell 30 includes 6 electrode assemblies 22, and a cushion 32 is disposed between every two adjacent electrode assemblies 22. The battery cell 30 includes 5 cushions 32.

Understandably, the arrangement methods of the cushions 32 may be combined as required by the battery cell 30. In some other embodiments, when the battery cell 30 includes a plurality of electrode assemblies 22 and a plurality of cushions 32, some of the cushions 32 may be disposed between the electrode assembly 22 and the shell 21, and some of the cushions 32 may be disposed between different electrode assemblies 22.

Optionally, the sealed bag 321 is made of a thermoplastic material.

Specifically, the thermoplastic material is of good chemical stability and is almost impermeable to water. Therefore, the sealed bag 321 made of a thermoplastic material can effectively isolate the electrolyte solution 31 from the cushion pad 322. In addition, the sealed bag 321 does not react with the electrolyte solution 31, and does not produce by-products that are detrimental to the electrochemical reaction of the battery 10.

Optionally, the thermoplastic material includes at least one of polyterephthalate, polyethylene, or polypropylene.

Optionally, the cushion pad 322 is made of a polymer foam material.

Specifically, the polymer foam material is a type of microporous material, and is rich in pore structures or pore channel structures inside. Therefore, the cushion pad 322 prepared from the polymer foam material is of excellent compressibility and can play a good cushioning role.

Optionally, the polymer foam material includes at least one of silicone rubber, melamine, or melamine resin.

Optionally, a thickness D1 of the sealed bag 321 and a thickness D2 of the cushion pad 322 satisfy: $2D1 \leq$

D2.

Optionally, the thickness D1 of the sealed bag 321 satisfies: 0.01 mm ≤ D1 ≤ 0.8 mm.

Optionally, the thickness D2 of the cushion pad 322 satisfies: 0.02 mm ≤ D2 ≤ 8 mm.

In this embodiment, the thicknesses of the sealed bag 321 and the cushion pad 322 are set to the specified values, thereby avoiding an excessive thickness of the sealed bag 321 that impairs the compressibility of the cushion pad 322, thereby ensuring a sufficient deformation space for the electrode assembly, and improving the cushioning performance of the cushion 32.

Optionally, referring to FIG. 5, the height H1 of the sealed bag 321 and the height H2 of the cushion pad 322 satisfy: 1 < H1/H2 ≤ 1.3. In other words, the length H1 of the sealed bag 321 in the first direction x and the length H2 of the cushion pad in the first direction x satisfy the above inequality relationship.

Optionally, still referring to FIG. 5, the length L1 of the sealed bag 321 and the length L2 of the cushion pad 322 satisfy: 1 < L1/L2 ≤ 1.3. In other words, the length L1 of the sealed bag 321 in the second direction y and the length L2 of the cushion pad 322 in the second direction y satisfy the above inequality relationship.

Optionally, in a thickness direction of the sealed bag 321, a ratio P of an area of the sealed bag 321 to an area of the cushion pad 322 satisfies: 1 < P ≤ 1.7. Specifically, for a cushion 32 of a regular cuboidal shape shown in FIG. 5, the area of the sealed bag 321 and the area of the cushion pad 322 in the thickness direction of the sealed bag satisfy the above inequality relationship.

In this embodiment, the parameters such as height, length, and thickness of the sealed bag 321 and the cushion pad 322 are set to satisfy the specified proportional relationship. On the one hand, the setting prevents the size of the sealed bag 321 from being not enough to fully cover the surface of the cushion pad 322, and prevents the cushion pad 322 from being exposed to and in contact with the electrolyte solution 31. On the other hand, the setting prevents the sealed bag 321 from being overlarge and causing a slip of the cushion pad 322 inside the sealed bag 321 that impairs the cushioning performance of the cushion 32, and helps to save the space inside the battery cell 30.

This application further provides a battery. FIG. 8 is a schematic structural diagram of a battery 800 according to an embodiment of this application.

As shown in FIG. 8, the battery 800 includes a battery cell 30 according to any embodiment of this application.

Further, this application provides an electrical device. FIG. 9 is a schematic structural diagram of an electrical device 900 according to an embodiment of this application.

As shown in FIG. 9, the electrical device 900 includes the battery cell 30 and/or battery 800 disclosed in any embodiment of this application. The battery cell 800 and/or battery 900 is configured to provide electrical energy.

To sum up, some embodiments of this application provide a battery cell 30, a battery 800, and an electrical device 900. A cushion 32 of a special structure is disposed in the battery cell 30. Therefore, the space conventionally used for holding a cushion structure in the battery 10 is vacated for accommodating more battery cells 30, thereby effectively increasing the energy density of the battery 10. The built-in cushion 32 is of good chemical stability and compressibility, and plays a good role in cushioning the deformation of the electrode assembly 22 without affecting the electrochemical reaction inside the battery cell 30, thereby effectively increasing the cycle life of the battery 10.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

**Claims**

1. A battery cell (30), **characterized in that** the battery cell comprises:

    a shell (21);
    an electrode assembly (22), wherein the electrode assembly (22) is disposed in the shell (21);
    an electrolyte solution (31), wherein the electrolyte solution (31) fills the shell (21); and
    a cushion (32), wherein the cushion (32) is accommodated in the shell (21) and attached to the electrode assembly (22), the cushion (32) comprises a sealed bag (321) and a cushion pad (322), and the sealed bag (321) covers a surface of the cushion pad (322).

2. The battery cell (30) according to claim 1, **characterized in that** the cushion (31) comprises a plurality of cushion pads (322), and the sealed bag (321) covers surfaces of the plurality of cushion pads (322).

3. The battery cell (30) according to claim 1 or 2, **characterized in that** the sealed bag (321) comprises a plurality of sub-regions (321a), each of the sub-regions (321a) is used for accommodating one of the cushion pads (322), at least one fixing unit (321b) is disposed between two adjacent sub-regions (321a), the fixing unit (321b) is configured to block the cushion pad (322) from moving in a first direction or a second direction, the first direction is a height direction of the sealed bag (321), and the second direction is a length direction of the sealed bag (321).

**4.** The battery cell (30) according to any one of claims 1 to 3, **characterized in that** the cushion (31) is disposed between the electrode assembly (22) and the shell (21).

**5.** The battery cell (30) according to any one of claims 1 to 4, **characterized in that** the battery cell (30) comprises a plurality of the electrode assemblies (22), and the cushion (32) is disposed between adjacent electrode assemblies (22).

**6.** The battery cell (30) according to any one of claims 1 to 5, **characterized in that** the sealed bag (321) is made of a thermoplastic material.

**7.** The battery cell (30) according to claim 6, **characterized in that** the thermoplastic material comprises at least one of polyterephthalate, polyethylene, or polypropylene.

**8.** The battery cell (30) according to any one of claims 1 to 7, **characterized in that** the cushion pad (322) is made of a polymer foam material.

**9.** The battery cell (30) according to claim 8, **characterized in that** the polymer foam material comprises at least one of silicone rubber, melamine, or melamine resin.

**10.** The battery cell (30) according to any one of claims 1 to 9, **characterized in that** a thickness D1 of the sealed bag (321) and a thickness D2 of the cushion pad (322) satisfy: $2D1 \leq D2$.

**11.** The battery cell (30) according to claim 10, **characterized in that** the thickness D1 of the sealed bag (321) satisfies: $0.01 \text{ mm} \leq D1 \leq 0.8 \text{ mm}$.

**12.** The battery cell (30) according to claim 10, **characterized in that** the thickness D2 of the cushion pad (322) satisfies: $0.02 \text{ mm} \leq D2 \leq 8 \text{ mm}$.

**13.** The battery cell (30) according to any one of claims 1 to 12, **characterized in that** a height H1 of the sealed bag (321) and a height H2 of the cushion pad (322) satisfy:

$$1 < H1/H2 \leq 1.3.$$

**14.** The battery cell (30) according to any one of claims 1 to 13, **characterized in that** a length L1 of the sealed bag (321) and a length L2 of the cushion pad (322)

satisfy:

$$1 < L1/L2 \leq 1.3.$$

**15.** The battery cell (30) according to any one of claims 1 to 14, **characterized in that**, in a thickness direction of the sealed bag (321), a ratio P of an area of the sealed bag to an area of the cushion (322) satisfies: $1 < P \leq 1.7$.

**16.** A battery (800), **characterized in that** the battery (800) comprises the battery cell (30) according to any one of claims 1 to 15.

**17.** An electrical device (900), **characterized in that** the electrical device (900) comprises the battery cell (30) according to any one of claims 1 to 15 and/or the battery (800) according to claim 16, and the battery cell (30) and/or the battery (800) is configured to provide electrical energy.

1

FIG. 1

10

FIG. 2

EP 4 539 228 A1

FIG. 3

FIG. 4

11

32

FIG. 5

32

FIG. 6

FIG. 7

Battery 800

Battery cell 30

FIG. 8

Electrical device 900

Battery 800

FIG. 9

## INTERNATIONAL SEARCH REPORT

| International application No. |
| --- |
| **PCT/CN2022/130502** |

| A. | CLASSIFICATION OF SUBJECT MATTER |
| --- | --- |

H01M 50/242(2021.01)i

According to International Patent Classification (IPC) or to both national classification and IPC

| B. | FIELDS SEARCHED |
| --- | --- |

Minimum documentation searched (classification system followed by classification symbols)

IPC： H01M

Documentation searched other than minimum documentation to the extent that such documents are included in the fields searched

Electronic data base consulted during the international search (name of data base and, where practicable, search terms used)

VEN, CNABS, CNTXT, ENTXT, ENTXTC, DWPI, CNKI: 电池, 缓冲, 弹性, 应力, 袋, 密封, 包覆, 电解液, battery, elastic, stress, bag, seal+, coat+, electrolyte, buffer

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP H1064576 A (SHIN-KOBE ELECTRIC MACHINERY CO., LTD.) 06 March 1998 (1998-03-06) description, paragraphs [0004]-[0016], and figures 1-2 | 1-17 |
| X | CN 216354448 U (CONTEMPORARY AMPEREX TECHNOLOGY CO., LTD.) 19 April 2022 (2022-04-19) description, paragraphs 47-148, and figures 3-7 | 1-17 |
| A | CN 217134495 U (CONTEMPORARY AMPEREX TECHNOLOGY CO., LTD.) 05 August 2022 (2022-08-05) entire document | 1-17 |
| A | CN 217562707 U (CONTEMPORARY AMPEREX TECHNOLOGY CO., LTD.) 11 October 2022 (2022-10-11) entire document | 1-17 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 June 2023** | **16 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/130502**

| Patent document cited in search report | | | Publication date (day/month/year) | Patent family member(s) | Publication date (day/month/year) |
|---|---|---|---|---|---|
| JP | H1064576 | A | 06 March 1998 | None | |
| CN | 216354448 | U | 19 April 2022 | None | |
| CN | 217134495 | U | 05 August 2022 | None | |
| CN | 217562707 | U | 11 October 2022 | None | |

Form PCT/ISA/210 (patent family annex) (July 2022)